# EUROPEAN PATENT SPECIFICATION

(11) **EP 2 302 746 B1**
(45) Date of publication and mention of the grant of the patent: **21.10.2015**
(21) Application number: 10177923.9
(22) Date of filing: 21.09.2010
(51) Int. Cl.: H01S 3/067, H01S 3/23

(54) **Method and apparatus for multipass optical amplification**
Methode und Apparat für optische Multidurchgangverstärkung
Méthode et appareil pour l'amplification optique à multipassage

(30) Priority: 28.09.2009 LT 2009073
(43) Date of publication of application: 30.03.2011
(73) Proprietor: Valstybinis moksliniu tyrimu institutas Fiziniu ir technologijos mokslu centras, 02300 Vilnius (LT)
(72) Inventor: Regelskis, Kèstutis, P., LT-06321, Vilnius (LT); Raciukaitis, Gediminas, LT-06226, Vilnius (LT)
(74) Representative: Draugeliene, Virgina Adolfina

(56) References cited:
- US-A- 5 239 408
- US-A1- 2004 202 220
- US-B1- 7 289 263

## Description

The present invention relates to the multi-pass laser amplification systems, in particular to the method and a device for the multi-pass amplification of laser radiation, in optical gain medium preferably in optical gain fibers.

Often, when amplifying laser radiation pulses in fiber amplifiers, depending on the energy of the seed pulse, not the whole pump power is consumed for amplification of the pulse. The output power of the fiber amplifier is limited by the pump power, however if low-energy pulses are being amplified, then only part of the energy stored in the optical gain fiber is transferred to the amplified pulse. Since a significant part of the stored energy remains in the optical gain fiber after amplifying of an incoming light radiation pulse, therefore it is possible to return the pulse back into the optical gain fiber for additional amplification. In this way, one amplification stage performs the function of three or four amplification stages, while at the same time the number of used components and the cost are reduced.

US 5303314 describes the device and the method for two-pass optical amplification comprising the input of the coherent light radiation, directing it into the optical gain medium and the two-fold passage of the light radiation through the optical gain medium, as well as the separation of the amplified light radiation from the incoming light radiation, and its output from the amplifier. A retro-reflective orthogonal polarization converter (Faraday rotator and a highly reflecting mirror) is used in this amplifier to return the amplified light radiation back into the amplifier for secondary amplification. The back-propagating light radiation is of orthogonal polarization in respect of the light radiation propagating forward, and by using the polarization-sensitive element the back-propagating light radiation after secondary amplification is separated from the incoming light radiation.

The disadvantage of the known device and the method for optical amplification is that its realization requires a converter for orthogonal polarization of the retro reflection (Faraday rotator and a highly reflecting mirror), which makes the device expensive. In addition, with the help of the known method and the device, the realization of the three-pass amplification through the optical gain medium is not possible since the amplifier is of a linear configuration and the change in the direction of light radiation propagation and polarization is implemented simultaneously in a single unit, therefore it is not possible to arrange the amplification in a wide range. This reduces application field for the optical amplifier. In most cases, laser radiation is additionally amplified within a three-pass amplifier as compared to the two-pass amplifier. Frequently, two-pass amplification is not sufficient, while in the four-pass amplifier the fourth pass may introduce more losses than amplification.

US 6384966 describes the scheme of a linear four-pass optical amplifier comprising the input of the coherent light radiation, directing it into the optical gain medium and the four-times propagation of said light radiation through the said optical gain medium, where the forward and backward propagating light radiation has mutually orthogonal polarization. In order to rotate the polarization, at least two retro-reflective converters of orthogonal polarization are used (two Faraday rotators and two highly reflective mirrors). Then the amplified light radiation is separated from the incoming light radiation and is directed out from the amplifier.

With the help of the known device, the realization of the three-pass amplification through the optical gain medium is not possible since it uses the amplifier of linear configuration, which sets the even number of passes, therefore the limited range of the amplification coefficient can be realized. This reduces the application field for the optical amplifier. In the four-pass amplifier the fourth pass may introduce more losses than amplification. Besides, when using fiber amplifiers, it is worth optimizing the number of passes in the amplifier since due to high light radiation power density in the fiber the nonlinear optical phenomena occur, reducing the quality of the laser beam. In addition, in order to implement the known optical amplification device at least two retro-reflective converters of orthogonal polarization are required (two Faraday rotators and two highly reflective mirrors), which makes the device expensive.

US 5239408 discloses a multi-pass amplifier arrangement including a ring shaped optical path with a limited number of components including a polarizer, a passive 90 degree phase rotator, a plurality of mirrors, a relay telescope, and an optical gain medium, the components being placed close to the image plane of the relay telescope to reduce diffraction or phase perturbations in order to limit the high peak intensity spiking.

The beam passes four times through the ring-shaped optical path, wherein, during each pass through the ring, the optical gain medium is passed twice along different paths to increase the amplifier gain to loss ratio. With the help of the known device, the realization of the three-pass amplification through the optical gain medium is not possible.

US 200410202220 discloses a double-pass ring-type bulk amplifier arrangement including a power amplifier, polarizers and wave plate. In this arrangement, the coupling of the beam to the amplifier is accomplished using polarizers. If the incoming beam is polarized in one direction, for example "p", the beam can be transmitted through the first polarizer, make a first pass through the power amplifier, and pass through a half-wave plate. The half-wave plate will change the polarization of the beam to a perpendicular "s" polarization, which will then reflect by the second polarizer and be reflected by the first polarizer. When the beam makes a second pass through the power amplifier, half-wave plate will change the polarization of the beam back to "p" polarization, and the beam will pass through the second polarizer and will work as an output beam.

With the help of the known device, the realization of the three-pass amplification through the optical gain medium is not possible.

US 7289263 B1 describes the scheme of double-pass fiber amplifiers including a polarization maintaining optical gain-fiber. The document relates in particular to optical fiber amplifiers in which light radiation is amplified on a first pass through a optical gain fiber in one direction and amplified again in a second pass through the same optical gain fiber. Input and twice-amplified output are separated by an all-fiber, polarization-maintaining polarization splitter combiner. The amplifier is arranged in such a way that light radiation plane polarized in a first polarization-orientation enters the amplifier via the polarization splitter-combiner and makes a first pass through the optical gain fiber in the first polarization-orientation. The light radiation is polarization rotated by the polarization rotating arrangement into a second polarization-orientation perpendicular to the first polarization-orientation, makes a second pass through the optical gain fiber in a second polarization orientation, and exits the amplifier via the polarization splitter-combiner in the second polarization-orientation.

This invention aims to simplify the optical amplification scheme, to extend the range of the amplification coefficient in a single cascade, and at the same time, to reduce the cost of the optical amplification device and to extend the application field for the optical amplifier. According to the present invention there is disclosed the method for multi-pass optical amplification, as defined in claim 1.

According to another embodiment of the invention, a device for multi-pass optical amplification is provided, as defined in claim 2.

In accordance with the invention, in the entire sequence of passes, identical combinations of the polarization and propagation directions of the light radiation, which undergoes amplification, do not occur.

The ring-shaped optical amplifier and the proposed combinations of the polarization and propagation direction through the optical gain medium of the light radiation, which undergoes amplification, is selected in such a way that the light radiation, which undergoes amplification, passes the optical gain medium three or four times, by satisfying the condition that during the passes the combination of the same directions between the polarization of the light radiation, which undergoes amplification, and the propagation direction, cannot be repeated, and in the entire sequence of passes there must be at least one time, when the light radiation passes the optical gain medium in the same direction two times in a sequence, while the polarization of light radiation, which undergoes amplification, during those passes is ortogonal in respect of each other. That permits us to implement three or four passes of the light radiation, which undergoes amplification, through the optical gain medium by selecting the combinations of the propagation direction of light radiation and its polarization during the passes through the optical gain medium and using the appropriate design of the device for multi-pass optical amplification. Thus, the range of the amplification coefficient in a single cascade can be extended. It simplifies the scheme of the device for optical amplification and reduces its cost, while at the same time it expands the application field for the optical amplifier.

In another constructive implementation of this invention, the optical gain medium is the polarization-maintaining optical gain fiber.

All free-space optical elements used in the scheme can be compactly assembled into a single unit, to which an optical gain fiber can be attached later on, when constructing the three- or four-pass amplifiers. By using the polarization maintaining optical gain fiber, twisting of the fiber along its optical axis also performs the function of polarization rotation, therefore saving on additional optical elements.

In another embodiment of this invention, which has the advantage, the function of the optical means for rotating the polarization of the light radiation, which undergoes amplification, by 90 degrees can be designed as the polarization maintaining optical gain fiber, twisted by 90 degrees around its longitudinal axis or as a combination of a half-wavelength plate and a Faraday rotator, or as a combination of the polarization maintaining optical gain fiber, twisted by 45 degrees around its longitudinal axis, and a Faraday rotator.

The optical means for polarization rotation comprising a Faraday rotator can be set on the ring- shaped optical amplifier axis next to the input or output end of the optical gain fiber or next to both of its ends.

Priority is also given to the embodiment of this invention, where the device for optical amplification is realized for three or four amplification passes, and the means for directing the incoming light radiation into the optical gain medium is a polarizing beam splitter set out on an optical axis of the ring-shaped optical amplifier between the first and second ends of the optical gain medium in such a way that one of the ends of the optical gain medium is optically coupled with the polarizing beam splitter through the means capable to rotate the polarization of the light radiation, which undergoes amplification, providing the predefined combinations of the polarization and propagation directions of the light radiation inside the optical gain medium. A mirror which is optically coupled to the polarizing beam splitter is provided, which changes the propagation direction of the radiation, which passes through the optical gain medium into the opposite direction. Besides, the means for inputting the incoming light radiation into the ring shaped optical amplifier, as well as for separating the amplified light radiation from the incoming light radiation and for its directing out from the optical gain medium comprises a beam splitter, a Faraday rotator and half-wavelength plate set out in series on an optical path, which branches out from the ring-shaped optical amplifier and which is optically coupled with the polarizing beam splitter.

In yet another implementation of this invention, which has the advantage, the device for multi-pass optical amplification is configured as a four-pass ring-shaped optical amplifier , in which on the optical axis between the ends of the optical gain medium, there are set out in series the first polarizing beam splitter optically coupled with said mirror, for reversion of the propagation direction of the light radiation which undergoes amplification through the optical gain medium, and the means for directing of the incoming light radiation into the ring shaped optical amplifier, which comprises the second polarizing beam splitter, the Faraday rotator and the half-wavelength plate, which are set out in series on the optical path of the incoming radiation, where the second polarizing beam splitter is optically coupled with a second mirror, to reverse the propagation direction of light radiation, which undergoes amplification, besides, said first polarizing beam splitter also performs the function of separating the amplified light radiation from the incoming light radiation as well as its output from the device.

The invention is explained in more detail with the help of figures, where
Fig. 1 shows the flow chart of the device for multi-pass optical amplification.
Fig. 2a is the optical scheme of the proposed device for multi-pass optical amplification with three or four passes through the optical gain fiber.
Fig.2b is the combination of passes of the light radiation, which undergoes amplification, through the optical gain medium in the device according to Fig.2a.
Fig.3a is one of the variations of the optical scheme of the proposed device for multi-pass optical amplification with four passes.
Fig.3b is the combination of four passes of the light radiation, which undergoes amplification, through the optical gain medium in the device according to Fig.3a. Fig.4a is another variation of the optical scheme of the proposed device for multi-pass optical amplification with four passes.
Fig.4b is the combination of four passes of the light radiation, which undergoes amplification, through the optical gain medium in the device according to Fig.4a.
Fig.5 shows the implementation options for the optical means for polarization rotation of the light radiation, which undergoes amplification, by 90 degrees, where
   a) illustrates the optical gain fiber, which maintains the polarization, twisted in respect of its longitudinal axis;
   b) shows the combination comprising a half-wavelength plate and a Faraday rotator;
   c) shows the combination comprising an optical gain fiber, which maintains the polarization, twisted by 45 degrees in respect of its longitudinal axis and a Faraday rotator.

The proposed method for multi-pass optical amplification comprises the following sequence of operations: directing the light radiation into the optical gain medium, where it propagates through said optical gain medium three or four times, according to the predefined combination of the polarization and propagation directions of the light radiation, which undergoes amplification, during the said passes, by satisfying the condition that, during the passes, the same combination of the polarization and propagation directions of the light radiation, which undergoes amplification, cannot be repeated, besides, in the entire sequence of the passes, there must be at least one time, when the light radiation propagates through the optical gain medium in the same direction two times in series, while the polarization of the light radiation, which undergoes amplification, is orthogonal between those passes.

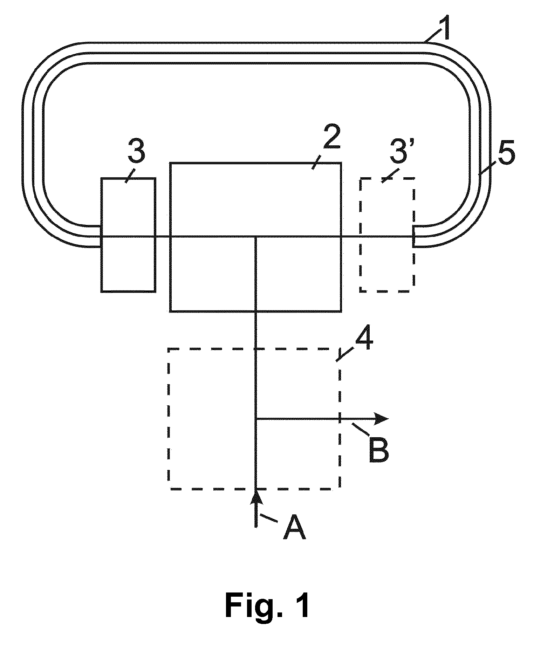

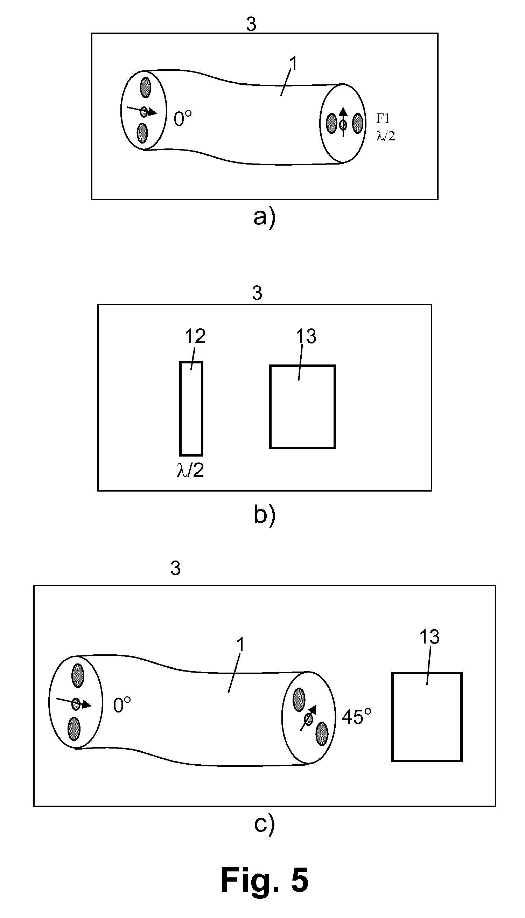

The overall optical scheme of the proposed device, shown in Fig.1, is of a ring-shaped. It comprises the optical gain medium 1, preferably optical gain fiber 1, the means 2 for directing the light radiation, which undergoes amplification, into the optical gain fiber 1, the means 3 for rotating the polarization of the light radiation, which undergoes amplification during the predetermined pass, by 90 degrees. The said means 2 and 3 are constructed and set out on the optical axis 5 of the ring- shaped optical amplifier in such a way that the light radiation, which undergoes amplification, passes through the optical gain fiber 1 three or four times, and at least once propagate through the optical gain fiber 1 two times in the same direction in series. Moreover, during the passes, when the light radiation propagates through the optical gain fiber 1 in the same direction two times in series, the polarization of radiation must be orthogonal, and during the passes, when the light radiation propagates through the optical gain fiber in different directions, its polarization, according to the predefined combination of the polarization and propagation directions, should be rotated by 90 degrees or should be kept without being rotated. The amplification cycle must satisfy the condition that during the passes, the identical combinations of the polarization and propagation directions of light radiation, which undergoes amplification, cannot be repeated. The device also has the means 4 to input the incoming light radiation (A) into the device for multi-pass optical amplification, to separate the amplified light radiation (B) from the incoming light radiation and to direct it out from the device for multi-pass optical amplification. The functions of said means 4 can be performed by the means 2, which directs the light radiation into the optical gain fiber 1. Said means 2 and selectively either the means 3 or 3', which rotate the polarization, are located on the longitudinal axis 5 of the optical gain fiber 1 which maintains the polarization, between its first and second ends. The means for rotating polarization (3, 3') can be set out on the optical axis 5 of the ring-shaped optical amplifier, next to the first end of the optical gain fiber 1 or next to its second end, i.e. correspondently in the positions 3 or 3', or may be in both positions (3, 3'), or the function of those means may be performed by the optical gain fiber 1 twisted by 90 degrees around its longitudinal axis (Fig.5a).

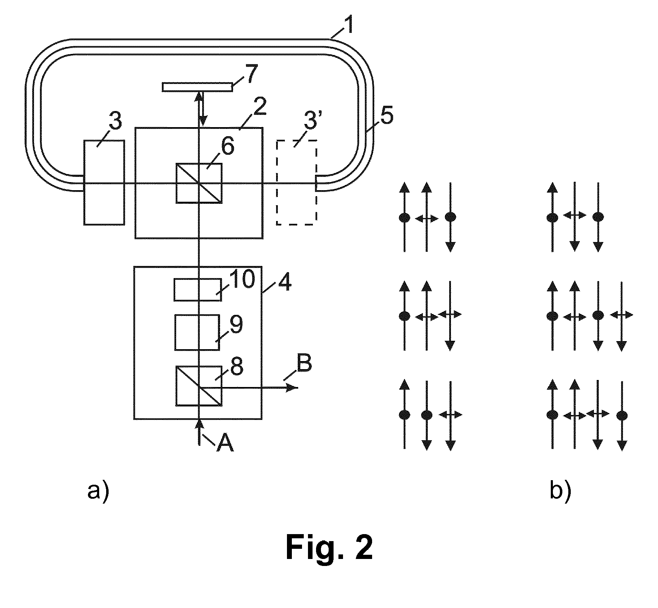

Fig.2a shows the optical scheme of the amplifying device for three or four passes of light radiation, which undergoes amplification, through the optical gain fiber 1, while Fig.2b shows the combination of the polarization and propagation directions of light radiation, which undergoes amplification, during the three or four passes through the optical gain fiber 1. The marks on the arrow (•) or (↔) indicate the polarization of light radiation, i.e. the said different marks placed on the arrows of propagation direction (•) (↔) mean that the polarization between passes is rotated by 90 degrees in respect of each other, while the identical marks mean that the polarization of the light radiation between passes coincides. This scheme is a ring-shaped optical amplifier, on the optical axis 5 of which an optical gain medium 1, namely, a polarization maintaining optical gain fiber 1, a polarizing beam splitter 6 for directing the light radiation into the optical gain fiber 1, and the means (3, 3') for rotating the polarization by 90 degrees are set out. Besides, this scheme has a mirror 7, which is optically coupled to the polarizing beam splitter 6, and the purpose of which is into the reverse the propagation direction of the light radiation, which undergoes amplification, through the optical gain fiber 1. The ring-shaped optical amplifier has a branching section with the means 4 for directing the incoming light radiation (A) into the amplifying device and for separating the amplified light radiation (B) from the incoming light radiation, and for directing it out of the device. The means 4 comprises a polarizing beam splitter 8, a Faraday rotator 9 and a half-wavelength plate 10 set out along the propagation direction of the incoming light radiation. The incoming light radiation (A) initially enters the polarizing beam splitter 8, and later on passes through a Faraday rotator 9 and a half-wavelength plate 10 and enters the polarizing beam splitter 6. In the case with three passes the means for rotating the polarization by 90 degrees can be the optical gain fiber 1, i.e. a combination of the polarization maintaining optical gain fiber, twisted by 45 degrees around its longitudinal axis, and a Faraday rotator (Fig.5c), set out in the position 3 or 3', while in the case of four passes, in order to rotate the polarization by 90 degrees, the said optical gain fiber 1 twisted by 90 degrees around its longitudinal axis, or two Faraday rotators, set out in the positions 3 and 3', can be used.

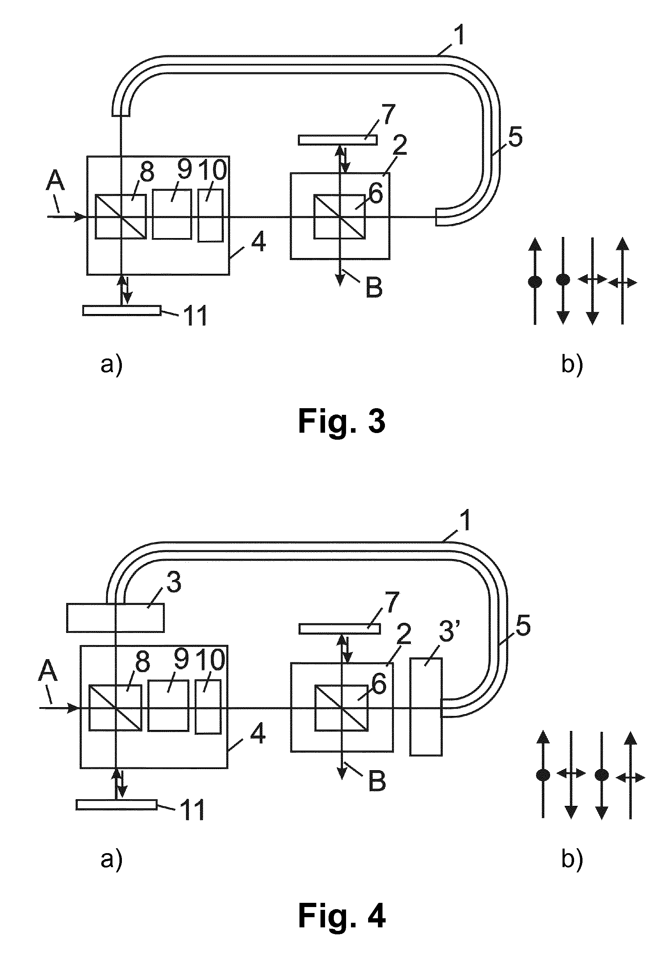

Fig.3a shows the embodiment of the amplifying device, which implements four passes of the light radiation, which undergoes amplification, through the optical gain fiber 1, while Fig.3b shows the combination of the polarization and propagation directions of the light radiation, which undergoes amplification, implemented in this scheme. In this embodiment of the optical amplifier, the polarizing beam splitter 6 is set out on the ring-like optical axis 5 of the ring-shaped optical amplifier and is optically coupled to the mirror 7, the purpose of which is to reverse the propagation direction of the light radiation, which undergoes amplification, passing through the optical gain fiber 1. The said polarizing beam splitter 6 also performs the function of separating the amplified light radiation (B) from the incoming light radiation and its output. The means 4 for directing of the incoming light radiation (A) into the amplifier comprises the polarizing beam splitter 8, the Faraday rotator 9 and the half-wavelength plate 10, set out in series along the propagation direction of the incoming light radiation, which are set out on the optical axis 5 of the ring-shaped optical amplifier and also performs rotation of the light radiation polarization by 90 degrees. Besides, this scheme has the second mirror 11, which is optically coupled to the polarizing beam splitter 8, the purpose of which is to reverse the propagation direction of the light radiation, which undergoes amplification, through the optical gain fiber 1.

Fig.4a shows another embodiment of the device for optical amplification, which implements four passes of the light radiation, which undergoes amplification, through the optical gain fiber 1, while Fig.4b shows the combination of the polarization and propagation directions of the light radiation, which undergoes amplification during the passes within this scheme. This scheme is similar to that shown in Fig.3a, the only difference is that there are the polarization rotating means 3 and 3', implemented as a combination (Fig.5b) of a half-wavelength plate 12 and a Faraday rotator 13, set out on the ring-like optical axis 5 in front of both ends of the optical gain fiber.

The invention is not limited to the described examples. The proposed multi-pass optical amplifier may comprise not only a ring, but also linear structure, where the radiation, which undergoes amplification, passes the optical gain medium three or four times and the goal, indicated earlier, is achieved.

By selecting any different combination of polarization and propagation direction of the light radiation, it is possible to implement three- or four-pass fiber amplifier.

The construction and the modus operandi of the three- or four-pass fiber amplifier depends on a sequence how the combination of the polarization and propagation directions of light radiation, which undergoes amplification, changes. Fig.2a shows the ring configuration of a device for optical amplification, which can implement three- or four-pass amplification. All the three-pass amplifiers have certain structural similarities and differences, for instance, the means for rotating polarization can be in the positions 3 or 3', while its construction is chosen based on the embodiments proposed in Fig.5. As an example, the principle of operation of a device for optical amplification, for one case of polarization and propagation directions, as shown in Fig.2b, is described as follows. The light radiation (A), incoming into the three-pass amplifying device, enters the polarizing beam splitter 8. The polarization of the incoming light radiation (A) is chosen in such a way that it propagates through the polarizing beam splitter 8 without changing its direction. Then the light radiation passes in series through a Faraday rotator 9 and a half-wavelength plate 10, which is oriented so that the total polarization rotation in the Faraday rotator 9 and in the half-wavelength plate 10, along the propagation direction of incoming light radiation propagation direction is equal to 90 degrees. The incoming light radiation (A) then enters the polarizing beam splitter 6, where it changes propagation direction (is reflected) inside of the splitter 6 and is directed into the optical gain fiber 1 for the first time through the first end of the optical gain fiber located on the left. The means, rotating the polarization by 90 degrees, is located in the position 3' and implemented according to Fig.5c (the polarization maintaining optical gain fiber 1 twisted by 45 degrees and a Faraday rotator 13). Inside the means 3', the polarization rotation by 90 degrees in respect of the light radiation, entering into the optical gain fiber, takes place only when the light radiation propagates from the right to the left (according to Fig. 2a). Due to polarization rotation, the amplified light radiation propagates through the said polarizing beam splitter 6 without changing its direction and for the second time is directed into the optical gain fiber 1. For the second time, the amplified light radiation again experiences polarization rotation by 90 degrees passing the optical gain fiber 1. Therefore, after passing the optical gain fiber for the second time, the polarization of light radiation is oriented in such direction that it is reflected in the polarizing beam splitter 6 and is directed to the mirror 7. After being reflected back by the mirror 7, the light radiation once again enters the polarizing beam splitter 6, is reflected into the second end of the optical gain fiber 1(to the right according to Fig.2a and passes through the means 3' for polarization rotation. The light radiation, traveling from the left to the right, does not experience any rotation of the polarization plane and for the third time is directed into the optical gain fiber 1 through the second end, which is located on the right (Fig.2a). During the third passage, the polarization and propagation direction of the light radiation are altered. After leaving the optical gain fiber 1, the light radiation enters the polarizing beam splitter 6, which directs it into the means (4). The total polarization rotation within the half-wavelength plate 10 and the Faraday rotator 9, along the direction of the outgoing light radiation, is equal to 0 degrees. The light radiation, after passing through the means 10 and 9, enters the polarizing beam splitter 8, and the amplified light radiation (B) gets separated from the incoming radiation and is directed out from the amplifying device.

Four-pass amplifiers are useful in amplifying weak light radiation signals. The four-pass amplification can be implemented with the help of the optical amplifying devices shown in Fig.2, Fig.3 and Fig.4. In all the figures, i.e. with three or four passes, the principle of operation is analogous to that described above, there are only differences in the layout of the elements within the schemes, which depend on the desired combination of the polarization and propagation direction of light radiation, which undergoes amplification, chosen for implementation. For example, Fig.4 shows the two means 3 and 3' for rotating the polarization used in the scheme consisting of a Faraday rotator 13 and a half-wavelength plate 12 (Fig.5b).

The light radiation (A), incoming into the four-pass amplifier, enters the polarizing beam splitter 8. The polarization of the incoming light radiation (A) is chosen in such a way that it propagates through the polarizing beam splitter 8 without changing its direction. Then the incoming light radiation (A) propagates through the Faraday rotator 9 and the half-wavelength plate 10, which is oriented so that the total polarization rotation in the Faraday rotator 9 and in the half-wavelength plate 10, along the propagation direction for the incoming light radiation (from the left to the right according to Fig.4a) is equal to zero degrees. Then the light radiation enters the polarizing beam splitter 6, and propagates through it without changing its direction. In the means 3' for polarization rotation, the light radiation, which propagates from the left to the right, does not experience any rotation of the polarization plane and for the first time is directed into the optical gain fiber 1 through the second end of the optical gain fiber 1, which is on the right (according to Fig.4a). After leaving the optical gain fiber 1, the light radiation enters the means 3, where by propagating in this direction it does not experience any rotation of the polarization plane. Furthermore, again the amplified light radiation propagates through the polarizing beam splitter 8 and without changing the direction reaches the mirror 11. After being reflected back from the mirror 11, the light radiation, which undergoes amplification, once again enters the polarizing beam splitter 8, propagates through it without changing the direction and enters the means for polarization rotation 3. The light radiation, which propagates in that direction, experiences rotation of the polarization plane by 90 degrees within the means 3 and for the second time is directed into the optical gain fiber 1 (with changed polarization and propagation direction). After leaving the optical gain fiber 1, the light radiation, which undergoes amplification, enters the means 3', and by propagating from the right to the left (according to Fig.4a) within the means 3' it experiences the polarization plane rotation by 90 degrees. Due to polarization rotation, the light radiation passes the said polarizing beam splitter 6 without changing its direction. Within the half-wavelength plate 10 and the Faraday rotator 9, the polarization of the radiation, when it propagates from the right to the left (according to Fig.4a), is rotated by 90 degrees. In the polarizing beam splitter 8, the light radiation, which undergoes amplification, is reflected back towards the means 3. The polarization plane of the light radiation is rotated by 90 degrees inside the means 3 and for the third time, the light radiation, which undergoes amplification, is directed into the optical gain fiber 1 (the same propagation direction as during the second pass, only with the rotated polarization). After the third pass leaving the optical gain fiber1, the light radiation, which undergoes amplification, enters the means 3', and while propagating from the right to the left (according to Fig.4a) within the means 3', it experiences the polarization plane rotation by 90 degrees. Due to polarization rotation the light radiation, which undergoes amplification, changes its propagation direction in the polarizing beam splitter 6 (is reflected) towards the mirror 7. After being reflected back by the mirror 7, the light radiation once again enters the polarizing beam splitter 6, is reflected to the right and passes through the polarization rotation means 3', where the light radiation, which undergoes amplification, while propagating from left to right does not experience any rotation of the polarization plane and is directed into the optical gain fiber 1 for the fourth time through its second end, which is set out on the right. After leaving the optical gain fiber 1, the light radiation enters the means 3, where by propagating in this direction it does not experience any rotation of the polarization plane. In the polarizing beam splitter 8, the light radiation is directed to the right. Then the light radiation, which undergoes amplification, passes through the Faraday rotator 9 and the half-wavelength plate 10, which is oriented so that the total polarization rotation in the Faraday rotator 9 and in the half-wavelength plate 10, along the propagation direction from the left to the right is equal to zero degrees. Then the light radiation enters the polarizing beam splitter 6, and the amplified light radiation (B) is directed out from the amplifying device.

## Claims

1. Method for multi-pass optical amplification, comprising the steps of:
- directing an incoming light radiation (A) into an optical gain medium (1)
- passing the light radiation through the optical gain medium several times with predefined combinations of polarization and propagation direction of the light radiation, which undergoes amplification during the passes, wherein during different passes the polarization of the light radiation is the same or is orthogonal with respect to each other,
- separating amplified light radiation (B) from the incoming light radiation (A) and directing it away from the optical gain medium, **characterized in that** the light radiation passes through the optical gain medium three or four times, wherein in the entire sequence of the passes, there is at least one time, when the light radiation passes the optical gain medium in the same direction two times in a sequence, while the polarization of light radiation, which undergoes amplification during those passes is orthogonal, and the combinations of the polarization and propagation directions of the light radiation , which undergoes amplification during the passes, is predetermined to satisfy that identical combinations of the polarization and propagation direction of the light radiation in the different passes do not occur.

2. Device for multi-pass optical amplification, comprising
- an optical gain medium (1),
- means (2) for directing an incoming light radiation (A), which undergoes amplification, into the optical gain medium (1),
- at least one optical means (3, 3') arranged to rotate the polarization of the light radiation, which undergoes amplification, by 90 degrees,
- means (4) designed to input the incoming light radiation into the device for multi-pass optical amplification, - means (6,8) for separating an amplified light radiation (B) from the incoming light radiation and for directing the amplified light radiation out of the device for multi-pass optical amplification, wherein the device for multi-pass optical amplification is configured as a ring-shaped optical amplifier on an optical axis (5) of which are placed:
- the optical gain medium (1),
- the means (2) for directing the incoming light radiation into the optical gain medium (1)
- at least one of the optical means (3, 3') arranged to rotate the polarization of the light radiation, which undergoes amplification during the predetermined pass, by 90 degrees,
**characterized in that**
all said means are constructed and optically coupled to each other in such a way, that the light radiation passes through the optical gain medium (1) three or four times, wherein: during different passes the polarization of the light radiation is the same or is orthogonal with respect to each other;
in the entire sequence of the passes, there is at least one time, when the light radiation passes the optical gain medium (1) in the same direction two times in a sequence, while the polarization of light radiation, which undergoes amplification during those passes is orthogonal; and
in the entire sequence of the passes, identical combinations of the polarization and propagation direction of the light radiation, which undergoes amplification, do not occur.

3. Device according to claim 2, **characterized in that** the optical gain medium (1) is a polarization maintaining optical gain fiber (1).

4. Device according to any one of claims 2-3, **characterized in that** the optical means arranged to rotate the polarization of the light radiation, which undergoes amplification during the predetermined pass, by 90 degrees consist of: the polarization maintaining optical gain fiber (1), twisted by 90 degrees around its longitudinal axis, or a combination of a half-wavelength plate (12) and a Faraday rotator (13), or a combination of the polarization maintaining optical gain fiber (1), twisted by 45 degrees around its longitudinal axis, and a Faraday rotator (13).

5. Device according to any one of claims 2-4, **characterized in that** the means (2) for directing the incoming light radiation into the optical gain medium (1) is a polarizing beam splitter (6), set out on the optical axis (5) of the ring shaped optical amplifier between the first and second ends of the optical gain medium (1) in such a way that one of the ends of the optical gain medium (1) is optically coupled with the polarizing beam splitter (6) through the means (3, 3') arranged to rotate the polarization of the light radiation, which undergoes amplification, and a mirror (7) is provided which is optically coupled with said polarizing beam splitter (6), wherein the mirror (7) changes the direction of the light radiation which passes through the optical gain medium (1) into the opposite direction, and wherein the means (4) designed to input the incoming light radiation into the ring shaped optical amplifier, as well as the means (8) for separating the amplified light radiation from the incoming light radiation and for directing the amplified light radiation away from the ring-shaped optical amplifier are constructed as a single common means comprising a polarizing beam splitter (8), a Faraday rotator (9) and a half-wavelength plate (10) set out in series on an optical path which branches out from the ring-shaped optical amplifier and which is optically coupled with the polarizing beam splitter (6).

6. Device according to any one of claims 2-4 , **characterized in that** the means (4) designed to input the incoming light radiation into the ring shaped optical amplifier, as well as the means for separating the amplified light radiation from the incoming light radiation and for directing the amplified light radiation away from the ring shaped optical amplifier are constructed as single common means to perform the input, separation and output functions or as two or more separate means to perform said respective functions.

7. Device according to claim 2, **characterized in that** it is configured as four-pass ring-shaped optical amplifier in which, between the ends of the optical gain medium (1), on the optical axis (5) of the ring-shaped optical amplifier are placed:
a first polarizing beam splitter (6), optically coupled with a first mirror (7) for reversion of the propagation direction of the light radiation, which undergoes amplification through the optical gain medium (1) and the means (4) designed to input the incoming light radiation into the ring-shaped optical amplifier, wherein the means (4) designed to input the incoming light radiation comprises a second polarizing beam splitter (8), a Faraday rotator (9) and a half-wavelength plate (10) set out in series on the optical path of the incoming light radiation so as to rotate its polarization, wherein
the second polarizing beam splitter (8) is optically coupled with a second mirror (11), to reverse the light propagation direction of light radiation, which undergoes amplification through the optical gain medium (1), while
the first polarizing beam splitter (6) is arranged
to separate the amplified light radiation
from the incoming light radiation and for directing the amplified light radiation away from the device for multi-pass optical amplification.

## Patentansprüche

1. Methode zur optischen Multidurchgangsverstärkung, folgende Schritte umfassend:
- Leitung einfallender Lichtstrahlung (A) in ein Medium zur optischen Verstärkung (1)
- Mehrmaliges Durchlaufen der Lichtstrahlung durch ein Medium zur optischen Verstärkung mit vordefinierten Kombinationen der Polarisations- und Ausbreitungsrichtung der Lichtstrahlung, die während der Durchgänge Verstärkung erfährt, wobei während der verschiedenen Durchgänge die Polarisation der Lichtstrahlung gleich oder zueinander orthogonal ist,
- Trennen der verstärkten Lichtstrahlung (B) von der einfallenden Lichtstrahlung (A) und Wegleiten vom Medium zur optischen Verstärkung, **dadurch gekennzeichnet, dass** die Lichtstrahlung das Medium zur optischen Verstärkung drei oder vier Mal durchläuft, wobei
bei der gesamten Durchgangssequenz die Lichtstrahlung mindestens einmal das Medium zur optischen Verstärkung zweimal in einer Sequenz in der gleichen Richtung durchläuft, während die Polarisation der während dieser Durchgänge Verstärkung erfahrenden Lichtstrahlung orthogonal ist,
und
die Kombinationen der Polarisations- und Ausbreitungsrichtungen der während der Durchgänge Verstärkung erfahrenden Lichtstrahlung vordefiniert sind, um zu gewährleisten, dass gleiche Kombinationen der Polarisations- und Ausbreitungsrichtung der Lichtstrahlung in den verschiedenen Durchgängen nicht auftreten.

2. Apparat zur optischen Multidurchgangsverstärkung, umfassend
- ein Medium zur optischen Verstärkung (1),
- Mittel zur Leitung einfallender, Verstärkung erfahrender Lichtstrahlung (A) in ein Medium zur optischen Verstärkung (1),
- mindestens ein zur Rotation der Polarisation der Verstärkung erfahrenden Lichtstrahlung um 90 Grad angeordnetes optisches Mittel (3, 3'),
- Mittel (4) zur Zuführung einfallender Lichtstrahlung in den Apparat zur optischen Multidurchgangsverstärkung,
- Mittel (6, 8) zur Trennung verstärkter Lichtstrahlung (B) von der einfallenden Lichtstrahlung und zur Leitung der verstärkten Lichtstrahlung aus dem Apparat zur optischen Multidurchgangsverstärkung heraus, wobei der Apparat zur optischen Multidurchgangsverstärkung als ringförmiger optischer Verstärker konfiguriert ist, auf dessen optischen Achse (5) liegen:
- das Medium zur optischen Verstärkung (1),
- das Mittel (2) zur Leitung der einfallenden Lichtstrahlung in das Medium zur optischen Verstärkung (1)
- mindestens eines der zur Rotation der Polarisation der während des vordefinierten Durchgangs Verstärkung erfahrenden Lichtstrahlung um 90 Grad angeordneten optischen Mittel (3, 3'),
**dadurch gekennzeichnet, dass**
all diese Mittel so konstruiert und optisch aneinander gekoppelt sind, dass die Lichtstrahlung drei oder vier Mal durch das Medium zur optischen Verstärkung (1) läuft, wobei:
während der verschiedenen Durchgänge die Polarisation der Lichtstrahlung gleich oder zueinander orthogonal ist;
bei der gesamten Durchgangssequenz die Lichtstrahlung mindestens einmal das Medium zur optischen Verstärkung zweimal in einer Sequenz in der gleichen Richtung durchläuft, während die Polarisation der während dieser Durchgänge Verstärkung erfahrenden Lichtstrahlung orthogonal ist, und
bei der gesamten Durchgangssequenz gleiche Kombinationen der Polarisations- und Ausbreitungsrichtungen der Verstärkung erfahrenden Lichtstrahlung nicht auftreten.

3. Apparat nach Anspruch 2, **dadurch gekennzeichnet, dass** das Medium zur optischen Verstärkung (1) eine polarisationserhaltende optische Verstärkungsfaser (1) ist.

4. Apparat nach einem der Ansprüche 2 bis 3, **dadurch gekennzeichnet, dass** die zur Rotation der Polarisation der während des vordefinierten Durchgangs Verstärkung erfahrenden Lichtstrahlung um 90 Grad angeordneten optischen Mittel bestehen aus:
der um 90 Grad um ihre Längsachse gedrehten, polarisationserhaltenden optischen Verstärkungsfaser oder
einer Kombination aus Halbwellenlängenplättchen (12) und einem Faraday-Rotator (13) oder
einer Kombination aus der um 45 Grad um ihre Längsachse gedrehten, polarisationserhaltenden optischen Verstärkungsfaser und einem Faraday-Rotator (13).

5. Apparat nach einem der Ansprüche 2 bis 4, **dadurch gekennzeichnet, dass** das Mittel (2) zur Leitung der einfallenden Lichtstrahlung in das Medium zur optischen Verstärkung (1) ein polarisierender Strahlteiler (6) ist, der so auf der optischen Achse (5) des ringförmigen optischen Verstärkers zwischen den ersten und zweiten Enden des Mediums zur optischen Verstärkung liegt, dass eines der Enden des Mediums zur optischen Verstärkung (1) optisch durch die zur Rotation der Polarisation der Verstärkung erfahrenden Lichtstrahlung angeordneten Mittel (3, 3') mit dem polarisierenden Strahlteiler (6) gekoppelt ist und
ein Spiegel (7) vorgesehen ist, der mit dem polarisierenden Strahlteiler (6) optisch gekoppelt ist,
wobei der Spiegel (7) die Richtung der Lichtstrahlung, die durch das Medium zur optischen Verstärkung (1) hindurchläuft, verändert und wobei die Mittel (4) zur Zuführung der Lichtstrahlung in den ringförmigen optischen Verstärker sowie die Mittel (8) zur Trennung der verstärkten Lichtstrahlung von der einfallenden Lichtstrahlung und zur Wegleitung der verstärkten Lichtstrahlung von dem ringförmigen optischen Verstärker als ein einziges gemeinsames Mittel konstruiert sind, umfassend einen polarisierenden Strahlteiler (8), einen Faraday-Rotator (9) und ein Halbwellenlängenplättchen (10), die hintereinander auf einem Lichtweg liegen, der sich von dem ringförmigen optischen Verstärker verzweigt und optisch mit dem polarisierenden Strahlteiler (6) gekoppelt ist.

6. Apparat nach einem der Ansprüche 2 bis 4, **dadurch gekennzeichnet, dass** die Mittel (4) zur Zuführung der einfallenden Lichtstrahlung in den ringförmigen optischen Verstärker sowie die Mittel (8) zur Trennung der verstärkten Lichtstrahlung von der einfallenden Lichtstrahlung und zur Wegleitung der verstärkten Lichtstrahlung von dem ringförmigen optischen Verstärker als ein einziges gemeinsames Mittel konstruiert sind, um Zuführungs-, Trennungs- und Ausgabefunktionen zu erfüllen oder als zwei oder mehr getrennte Mittel konstruiert sind, um diese jeweiligen Funktionen zu erfüllen.

7. Apparat nach Anspruch 2, **dadurch gekennzeichnet, dass** er als Vier-Pass ringförmiger optischer Verstärker konfiguriert ist, in dem, zwischen den Enden des Mediums zur optischen Verstärkung (1), auf der optischen Achse (5) des ringförmigen optischen Verstärkers liegen:
ein erster polarisierender Strahlteiler (6), der mit einem ersten Spiegel (7) zur Umkehr der Ausbreitungsrichtung der Lichtstrahlung, die durch das Medium zur optischen Verstärkung (1) Verstärkung erfährt, gekoppelt ist und die Mittel (4) zur Zuführung der einfallenden Lichtstrahlung in den ringförmigen optischen Verstärker, wobei
das Mittel (4) zur Zuführung der einfallenden Lichtstrahlung einen zweiten polarisierenden Strahlteiler (8), einen Faraday-Rotator (9) und ein Halbwellenlängenplättchen (10), die hintereinander auf dem Lichtweg der einfallenden Lichtstrahlung liegen, umfasst, wobei
der zweite polarisierende Strahlteiler (8) optisch mit einem zweiten Spiegel (11) gekoppelt ist, um die Lichtausbreitungsrichtung der Lichtstrahlung umzukehren, die durch das Medium zur optischen Verstärkung (1) Verstärkung erfährt,
während
der erste polarisierende Strahlteiler (6) angeordnet ist, um die verstärkte Lichtstrahlung von der einfallenden Lichtstrahlung zu trennen und um die verstärkte Lichtstrahlung von dem Apparat zur optischen Multidurchgangsverstärkung wegzuleiten.

## Revendications

1. Procédé d'amplification optique à passages multiples, comprenant les étapes consistant à :
diriger un rayonnement lumineux entrant (A) dans un milieu à gain optique (1)
faire passer plusieurs fois le rayonnement lumineux à travers le milieu à gain optique avec des combinaisons prédéfinies de polarisation et de direction de propagation du rayonnement lumineux, faisant l'objet d'une amplification pendant les passages, dans lequel, au cours de différents passages, la polarisation du rayonnement lumineux est la même ou les polarisations sont orthogonales les unes par rapport aux autres,
séparer le rayonnement lumineux amplifié (B) du rayonnement lumineux entrant (A) et l'éloigner du milieu à gain optique, **caractérisé en ce que**
le rayonnement lumineux traverse trois ou quatre fois le milieu à gain optique, dans lequel
dans l'ensemble de la séquence de passages, une fois au moins le rayonnement lumineux passe par le milieu à gain optique deux fois dans la même direction dans une séquence, tandis que la polarisation du rayonnement lumineux, faisant l'objet d'une amplification pendant ces passages est orthogonale,
et
les combinaisons de la polarisation et des directions de propagation du rayonnement lumineux, faisant l'objet d'une amplification pendant les passages, sont prédéterminées de façon à satisfaire au fait que des combinaisons identiques de la polarisation et de la direction de propagation du rayonnement lumineux lors des différents passages ne se produisent pas.

2. Dispositif d'amplification optique à passages multiples, comprenant :
un milieu à gain optique (1),
un moyen pour diriger dans le milieu à gain optique (1) un rayonnement lumineux entrant (A), faisant l'objet d'une amplification,
au moins un moyen optique (3, 3') agencé pour faire tourner de 90 degrés la polarisation du rayonnement lumineux faisant l'objet de l'amplification,
un moyen (4) conçu pour faire entrer le rayonnement lumineux dans le dispositif d'amplification optique à passages multiples,
un moyen (6, 8) pour séparer un rayonnement lumineux amplifié (B) du rayonnement lumineux entrant et pour éloigner le rayonnement optique amplifié du dispositif d'amplification optique à passages multiples, dans lequel
le dispositif d'amplification optique à passages multiples est configuré sous forme d'un amplificateur optique en anneau sur un axe optique (5) sur lequel sont placés :
le milieu à gain optique (1),
le moyen (2) pour diriger le rayonnement lumineux entrant dans le milieu à gain optique (1),
au moins l'un des moyens optiques (3, 3') agencés pour faire tourner de 90 degrés la polarisation du rayonnement lumineux faisant l'objet d'une amplification pendant le passage prédéterminé,
**caractérisé en ce que**
tous lesdits moyens sont construits et couplés optiquement les uns aux autres de telle sorte que le rayonnement lumineux traverse trois ou quatre fois le milieu à gain optique (1), dans lequel
au cours des différents passages, la polarisation du rayonnement lumineux est la même ou les polarisations sont orthogonales les unes par rapport aux autres ;
dans l'ensemble de la séquence de passages, une fois au moins le rayonnement lumineux passe par le milieu à gain optique (1) deux fois dans la même direction dans une séquence, tandis que la polarisation du rayonnement lumineux, faisant l'objet d'une amplification pendant ces passages est orthogonale,
et
dans l'ensemble de la séquence de passages, les combinaisons identiques de passages de la polarisation et de la direction de propagation du rayonnement lumineux, faisant l'objet d'une amplification ne se produisent pas.

3. Dispositif selon la revendication 2, **caractérisé en ce que** le milieu à gain optique (1) est une fibre à gain optique conservant la polarisation (1).

4. Dispositif selon l'une quelconque des revendications 2 à 3, **caractérisé en ce que** le moyen optique agencé pour faire tourner de 90 degrés la polarisation du rayonnement lumineux, faisant l'objet d'une amplification pendant le passage prédéterminé, est constitué de :
la fibre à gain optique conservant la polarisation (1) tordue de 90 degrés autour de son axe longitudinal, ou
la combinaison d'une plaque d'une demi-longueur d'onde (12) et d'un rotateur de Faraday (13), ou
la combinaison de la fibre à gain optique conservant la polarisation (1) tordue de 45 degrés autour de son axe longitudinal et d'un rotateur de Faraday (13).

5. Dispositif selon l'une quelconque des revendications 2 à 4, **caractérisé en ce que** le moyen (2) pour diriger le rayonnement lumineux entrant dans le milieu à gain optique (1) est un séparateur de faisceau polarisant (6), disposé sur l'axe optique (5) de l'amplificateur optique en anneau entre les première et seconde extrémités du milieu à gain optique (1) de telle sorte que l'une des extrémités du milieu à gain optique (1) est couplée optiquement avec le séparateur de faisceau polarisant (6) par l'intermédiaire des moyens (3, 3') agencés pour faire tourner la polarisation du rayonnement lumineux faisant l'objet d'une amplification, et
un miroir (7) est prévu, qui est couplé optiquement avec ledit séparateur de faisceau polarisant (6), dans lequel le miroir (7) modifie la direction du rayonnement lumineux traversant le milieu à gain optique (1) dans la direction opposée, et dans lequel
le moyen (4) conçu pour entrer le rayonnement lumineux entrant dans l'amplificateur optique en anneau, ainsi que le moyen (8) pour séparer le rayonnement lumineux amplifié du rayonnement lumineux entrant et pour éloigner le rayonnement lumineux amplifié de l'amplificateur optique en anneau, sont construits sous forme d'un moyen commun unique comprenant un séparateur de faisceau polarisant (8), un rotateur de Faraday (9) et une plaque d'une demi-longueur d'onde (10) disposés en série sur le trajet optique, s'étendant depuis l'amplificateur optique en anneau et qui est couplé optiquement avec le séparateur de faisceau polarisant (6).

6. Dispositif selon l'une quelconque des revendications 2 à 4, **caractérisé en ce que** le moyen (4) conçu pour entrer le rayonnement lumineux entrant dans l'amplificateur optique en anneau, ainsi que le moyen pour séparer le rayonnement lumineux amplifié du rayonnement lumineux entrant et pour éloigner le rayonnement lumineux amplifié de l'amplificateur optique en anneau, sont construits sous forme d'un moyen commun unique pour exécuter les fonctions d'entrée, de séparation et de sortie de deux moyens séparés ou plus pour exécuter lesdites fonctions respectives.

7. Dispositif selon la revendication 2, **caractérisé en ce qu'**il est configuré sous forme d'un amplificateur optique en anneau à quatre passages dans lequel, entre les extrémités du milieu à gain optique (1) sur l'axe optique (5) de l'amplificateur optique en anneau, sont placés :
un premier séparateur de faisceau polarisant (6) couplé optiquement avec un premier miroir (7) pour inverser la direction de propagation du rayonnement lumineux, faisant l'objet d'une amplification à travers le milieu à gain optique (1) et le moyen (4) conçu pour entrer le rayonnement lumineux entrant dans l'amplificateur optique en anneau, dans lequel
le moyen (4) conçu pour entrer le rayonnement lumineux entrant comprend un second séparateur de faisceau polarisant (8), un rotateur de Faraday (9) et une plaque d'une demi-longueur d'onde (10) disposés en série sur le trajet optique du rayonnement lumineux entrant, dans lequel
le second séparateur de faisceau polarisant (8) est couplé optiquement avec un second miroir (11) pour inverser la direction de propagation de la lumière du rayonnement lumineux, faisant l'objet d'une amplification, par l'intermédiaire du milieu à gain optique (1),
tandis que le premier séparateur de faisceau polarisant (6) est agencé pour séparer le rayonnement lumineux amplifié du rayonnement lumineux entrant et pour éloigner le rayonnement lumineux amplifié du dispositif d'amplification optique à passages multiples.
